# EUROPÄISCHE PATENTANMELDUNG

(11) **EP 1 920 907 A1**
(43) Veröffentlichungstag der Anmeldung: **14.05.2008**
(21) Anmeldenummer: 07019874.2
(22) Anmeldetag: 11.10.2007
(51) Int. Cl.: B29C 70/12, B29C 70/50

(54) **Verfahren zur Herstellung von Harzmatten, Glasfaservlies, Harzmatte und Verwendung von Airlaid Vorrichtungen zur Herstellung von Glasfaservliesen für Harzmatten**

(30) Priorität: 07.11.2006 DE 102006052386
(71) Anmelder: Johns Manville Europe GmbH, 61352 Bad Homburg v.d.H. (DE)
(72) Erfinder: D'Silva, Sean, Englewood, CO 80111 (US); Stehlin, Thomas F., 65830 Kriftel (DE)
(74) Vertreter: Dörr, Klaus

(57) **Zusammenfassung**

Die vorliegende Erfindung betrifft ein Verfahren zur Herstellung von Sheet Moulding Compounds (SMC) bei dem die benötigten Glasfaservliese inline erzeugt werden und eine Inhomogenität von 10% oder weniger, ein Flächengewicht von 400g/m2 oder höher und eine Festigkeit von weniger als 10 N aufweisen. Des Weiteren beschreibt die vorliegende Erfindung Harzmatten, die die erfindungsgemäßen Glasfaservliese, welche wertvolle Zwischenprodukte darstellen, umfassen.

## Beschreibung

Die vorliegende Erfindung betrifft ein Verfahren zur Herstellung von Glasfaservliesen die als Harzmatten bei der Herstellung von Sheet Moulding Compounds (SMC) geeignet sind.

Harzmatten, insbesondere Sheet Moulding Compounds (SMC) werden seit langem in der Technik eingesetzt. Somit ist auch die Herstellung von SMC und die Weiterverarbeitung zu Bauteilen schon seit längerer Zeit bekannt. Beim üblichen SMC Herstellprozess wird auf eine Folie zunächst eine Lage eines Harzes aufgebracht. Auf diese Harzschicht werden dann im nächsten Schritt Schnittfasern aus Verstärkungsmaterialien - zumeist Glasfasern - aufgebracht. Die Schnittfasern werden inline erzeugt, indem eine größere Anzahl von so genannten Glasfaserrovings zugeführt und mit Hilfe von Choppern geschnitten werden. Eine weitere Harzschicht und eine weitere Folie vervollständigen den SMC-Herstellprozess.

Nach Herstellung des SMC ist eine Reifung von einigen Tagen notwendig. In dieser Zeit finden chemische Reaktionen statt, die die Viskosität des Harzes verändern und eine weitere Durchtränkung der Faserschicht fordern. Beim nachfolgenden Pressvorgang findet dann aufgrund der wirkenden Scherkräfte eine partielle Auflösung der Faserbündelstruktur statt.

Bevorzugte SMCs weisen eine hohe Fließfähigkeit auf, die es z.B. ermöglicht, dass die Pressform nur zu 30 bis 50 % abgedeckt werden muss. Hinzu kommt die erreichbare Oberflächengüte, die bis zu Class-A Niveaus möglich sind. Harzmatten, die ein Gewebe oder ein Faservlies aus kontinuierlichen Fasern umfassen, weisen vielfach eine reduziert Fliessfähigkeit auf. Dementsprechend müssen derartige Harzmatten mit hoher Genauigkeit in die Pressform eingebracht werden. Des Weiteren kann die Oberflächenqualität der hergestellten Formteile nachteilig durch derartige Verstärkungsmatten beeinflusst werden.

Die dargestellte SMC-Herstellung mit Schnittfasern ist in der Regel ein relativ komplexer und langsamer Prozess. Wie beschrieben, werden hierfür im Allgemeinen inline geschnittene Glasfasern eingesetzt, die vor Ort aus so genannten Rovings hergestellt werden. Dadurch wird eine große Anzahl an Spulen, Zuführausrüstung und anderen Vorrichtungen benötigt, die erheblichen Arbeitsaufwand erfordern und sehr leicht zu technischen Problemen führen können. Dadurch entstehen unmittelbar Qualitäts- und Ausbeuteproblems, z.B. durch einen Stillstand der Maschinen, die vielfach erhebliche Kosten verursachen. Des Weiteren begrenzt das Schneiden der Fasern die Geschwindigkeit der SMC-Herstellung.

In WO99/55521 wird versucht, in einem inline-Prozesses eine Glasfaserschicht mittels eines Nasslegeverfahrens zu erzeugen. Dieses Verfahren ist aufwändig und erfordert wegen der erforderlichen Trocknung umfangreiche zusätzliche Maßnahmen. Des Weiteren werden wesentliche Eigenschaften der Glasfaservliese nicht beschrieben.

Die WO01/19599 beschreibt ein Verfahren, bei dem im SMC-Prozess eine Schicht aus unidirektionalen Verstärkungsfasern eingelegt werden, die zusätzlich noch mit Schnittfasern belegt werden. Dieses Verfahren ist insbesondere für Anwendungen geeignet, die besondere Festigkeitserfordernisse in einer Vorzugsrichtung berücksichtigt. Des Weiteren werden wesentliche Eigenschaften der Glasfaservliese nicht beschrieben.

Die WO2005/054559 schließlich beschreibt eine Methode zur Herstellung von genadelten Glasfasermatten, die dann auch für SMC-ähnliche Komponenten eingesetzt werden können. Die Vernadelung einer Matte stellt jedoch einen zusätzlichen und aufwändigen Prozessschritt dar. Des Weiteren werden wesentliche Eigenschaften der Glasfaservliese nicht beschrieben. So führt eine Vernadelung insbesondere zu einer u.U. sehr dauerhaften Verfestigung der Vliese. Daher ist die Fliesfähigkeit der aus diesen Glasfasermatten hergestellten Harzmatten relativ gering.

Das Dokument US2005/0082721 beschreibt Matten, die Glasfasern und Kunststofffasern aufweisen. Jedoch sind in diesem Dokument keine Hinweise auf Reaktionsharze enthalten. Des Weiteren werden wesentliche Eigenschaften der Matten nicht beschrieben.

Die europäische Patentanmeldung (EP JM05002) offenbart Glasfaservliese und deren Einsatz als Harzmatte in SMC's, wobei die Glasfaservliese eine Inhomogenität von höchstens 10%, ein Flächengewicht von mindestens 600g/m2 und eine Festigkeit von mindestens 10N aufweisen. Die geforderte Festigkeit von mindestens 10N bedeutet, dass das Glasfaservlies mittels eines Binders oder anderer Verfestigungsmethoden (z.B. Nadelung) verfestigt werden muss. Mit Hilfe derartig ausgestalteter Glasfaservliese ist es möglich diese zuvor zu fertigen und in den SMC Prozess einzuschleusen. Somit kann auf das inline Schneiden der Rovings verzichtet werden.

Insgesamt bleibt festzuhalten, dass die derzeitigen Harzmatten mit Schnittfasern vielfach den vorgegebenen Zweck erfüllen. Allerdings ist die Herstellung dieser Harzmatten teuer, komplex und anfällig für Fehler. Außerdem können die Verfahren nicht flexibel gefahren werden.

Aufgabe war es somit, ein Verfahren anzugeben, durch welches Harzmatten kostengünstig und sicher hergestellt werden können. Die so erhaltenen Harzmatten sollten zu Formteilen mit einer hohen Oberflächenqualität verarbeitet werden können.

Des Weiteren sollten die Harzmatten einfach verarbeitet werden können, wobei die Harzmatten eine hohe Fließfähigkeit aufweisen sollten.

Gegenstand der vorliegenden Erfindung ist somit ein Verfahren zur Herstellung von Sheet Moulding Compounds (SMC) umfassend die Schritte:
A) Aufbringen einer Harzschicht auf eine Trägerfolie,
B) Inline Erzeugen eines Glasfaservlieses aus Glass-Stapelfasern und Ablage des Vlieses auf der gemäß Schritt A) erhaltenen beschichteten Trägerfolie,
C) Aufbringen einer weiteren Harzschicht und einer weiteren Trägerfolie auf das gemäß Schritt B) erhaltene flächige Gebilde,
dadurch gekennzeichnet, dass das in Schritt B) gebildete Glasfaservlies eine Inhomogenität von höchstens 10% und ein Flächengewicht von mindestens 400g/m² aufweist und dem Glasfaservlies kein Binder zugesetzt wird.

Mit Hilfe des erfindungsgemäßen Verfahrens können auch Glasvliese eingesetzt werden, deren Festigkeit weniger als 10N beträgt bzw. keine eigene Festigkeit aufweisen.

Die Erzeugung des Glasfaservlieses aus Glass-Stapelfasern in Schritt B) erfolgt inline, d.h. das Glasvlies wird gebildet und direkt auf der harzbeschichteten Trägerfolie abgelegt, und nicht in Form eines bereits vorher gefertigten Glasvlieses zugeführt. Das erfindungsgemäß gebildete Glasfaservlies wird keiner zusätzlichen mechanischen Verfestigung, beispielsweise einer Vernadelung, unterworfen, bevor es weiterverarbeitet wird.

Es hat sich gezeigt, dass die inline Bildung des Glasvlieses vorzugsweise mittels eines AirLaid-Verfahrens durchgeführt wird.

Die in Schritt B) erzeugten Glasfaservliese stellen wertvolle Zwischenprodukte zur Herstellung von Harzmatten dar. Dementsprechend sind auch Harzmatten umfassend die erfindungsgemäßen Glasfaservliese Gegenstand der vorliegenden Erfindung.

### Durch die vorliegende Erfindung werden insbesondere folgende Vorteile erzielt:

Die erfindungsgemäßen Glasfaservliese ermöglichen eine kostengünstige Herstellung von Harzmatten, insbesondere von Prepregs und/oder Sheet Moulding Compounds (SMC). So kann insbesondere auf das Schneiden von Glasfasern während des Herstellungsprozesses der Harzmatten verzichtet werden. Hierdurch kann der Prozess zur Herstellung der Harzmatten vereinfacht werden. Dementsprechend werden Kostenvorteile erzielt.

Die durch Härten der Harzmatten erhaltenen Formkörper zeigen eine hohe Festigkeit sowie eine hohe Oberflächenqualität.

Die durch Einsatz der Glasfaservliese der vorliegenden Erfindung erhältlichen Harzmatten können auf bekannte Weise verarbeitet werden. Hierbei zeigen diese Harzmatten eine hohe Fließfähigkeit, wobei die Pressform zu einem relativ geringen Teil abgedeckt werden muss. Die Festigkeit und Steifigkeit kann je nach Verstärkungsfasermaterial in einem weiten Spektrum variiert werden.

Das erfindungsgemäße Verfahren kann auf vorkonfektionierte, geschnittene Glasfasern bzw. Glasfaserrovings zurückgreifen. Der aufwendige und anfällige inline Schneideprozess der Rovings entfällt, so dass zusätzlichen Bauteile und Vorrichtungen, wie zum Beispiel Rovingzuführungen, Creels, Überwachungseinrichtungen, etc, die aufgrund der großen Anzahl der zuzuführenden Rovings erforderlich sind, vermieden werden können. Somit verringert sich auch der investive Aufwand des SMC Prozesses. Hierdurch können die Kosten zur Herstellung der Harzmatten verringert werden. Darüber hinaus kann die Qualität der Harzmatten, insbesondere die Konstanz der Qualität verbessert werden, die unter dem häufigen Wiederanfahren des SMC Prozesses leiden kann.

Ein weiterer Vorteil des erfindungsgemäßen Verfahrens liegt darin, dass der bislang limitierende Schneideprozess beseitigt wurde, so dass der gesamte SMC Prozess mit höheren Geschwindigkeiten als bisher gefahren werden kann.

Die in Schritt B) eingesetzten Glasfasern für SMC sind dem Fachmann bekannt und unterliegen keiner besonderen Einschränkung. Geeignete Glasfasern sind u. a. in Ullmann's Encyclopaedia of Industrial Chemistry, 5. Auflage auf CD-ROM beschrieben (Stichwort: Fibres). Geeignete Glasfasern umfassen jene, die aus A-Glas, E-Glas, S-Glas, C-Glas, T-Glas oder R-Glas hergestellt wurden.

Die Glasfasern haben vorzugsweise einen Durchmesser im Bereich von 5 bis 20 µm, besonders bevorzugt von 8 bis 18 µm und ganz besonders bevorzugt von 10 bis 15 µm und eine Länge im Bereich von 6 mm bis 100 mm, bevorzugt im Bereich von 10 bis 75 mm und besonders bevorzugt im Bereich von 15 bis 60 mm. Mit Hilfe der erfindungsgemäßen inline-Erzeugung des Glasvlieses in Schritt B) können in einer sehr flexiblen Art und Weise Glasvliese erzeugt werden. Mit Hilfe des erfindungsgemäßen Verfahrens können Mischungen von verschiedenen Glasfaserlängen und -Durchmesser gleichzeitig oder auch nacheinander abgelegt werden. Dies hat zur Folge, dass die herzustellenden Produkte leichter variiert werden können. Bei Einsatz von vorgefertigten Glasvliesen, wie beispielsweise in der europäischen Patentanmeldung Nr. 06017473.7 beschrieben, ist jede Umstellung mit einer Produktionsunterbrechung gleichzusetzen. Hier schafft das erfindungsgemäße Verfahren Abhilfe. Jede Veränderung des Glasvlieses kann im laufenden Verfahren vorgenommen werden, ohne dass es einer Produktionsunterbrechung gleichkommt.

Des Weiteren können die Glasfasern bekannte Additive aufweisen. Beispielsweise können die Glasfasern bekannte Schlichtemittel (sizing agents) umfassen, mit denen die Hafteigenschaften der Glasfasern verändert werden können.

Die zur Herstellung des Glasfaservlieses eingesetzten Glas-Stapelfasern bzw. geschnittenen Glasfaserrovings können auch noch weitere Fasern enthalten. Bei diesen Fasern handelt es sich nicht um Bindefasern sondern vielmehr um solche Faser, welche die Anwendungseigenschaften für die spätere Verwendung als SMC justieren. Geeignete Zusatzfasern sind beispielsweise Kohlefasern, andere mineralische Fasern und Aramidfasern, wie Kevlar^{®} und Nomex^{®}, wobei die Aufzählung an dieser Stelle nicht abschließend ist.

Die in Schritt B) eingesetzten Glasfasern liegen vorzugsweise in Form von Bündeln vor. Bündel bedeutet, dass die Glasfasern in Längsrichtung eine gewisse Ordnung aufweisen. Vorzugsweise weisen die Bündel 50 - 1000, besonders bevorzugt 100 bis 500 Glasfasern und besonders bevorzugt 200 bis 300 Glasfasern auf.

Vorzugsweise liegen mindestens 50 Gew.-%, besonders bevorzugt mindestens 70 Gew.-% der Glasfasern, bezogen auf das Gewicht der Glasfasern, in dem Glasfaservlies in Form von Bündeln vor.

Die Glasfaserbündel, auch Glasfaserstränge genannt, weisen vorzugsweise einen Titer im Bereich von 20 bis 200 tex, besonders bevorzugt 30 bis 160 tex und ganz besonders bevorzugt im Bereich von 40 bis 120 tex auf.
Das in Schritt B) erzeugte Glasfaservlies weist eine Inhomogenität der Faserverteilung (Flächengewicht) über die Breite des Vlieses von weniger als 10%, vorzugsweise weniger als 5% auf. Die Standardabweichung der mittleren Flächengewichtsverteilung über die Breite des Vlieses beträgt vorzugsweise höchstens 5%, besonders bevorzugt höchstens 2,5%. Die Inhomogenität kann gemäß ISO 3374 bestimmt werden.

Das Flächengewicht des in Schritt B) erzeugte Glasfaservlies liegt bevorzugt im Bereich von 400 bis 2500g/m², vorzugsweise im Bereich von 800 bis 1500 g/m2 und besonders bevorzugt im Bereich von 900 bis 1400 g/m2. Das Flächengewicht wird gemäß ISO 3374 bestimmt.

Das in Schritt B) erzeugte Glasfaservlies weist vorzugsweise eine Festigkeit im Bereich von weniger als 10 N, bevorzugt weniger als 9,5 N und besonders bevorzugt weniger als 9 N auf. Die Festigkeit kann gemäß ISO 3342 bestimmt werden und bezieht sich auf jeweils 5 cm Probenbreite.

Dem in Schritt B) erzeugten Glasfaservlies werden keine Binder zugesetzt, so dass dieses eine verbesserte Fliessfähigkeit im SMC Prozess aufweisen.

Die in Schritt A) verwendeten Trägerfolien sind dem Fachmann auf dem Gebiet der SMC Prozesse bekannt und unterliegen keiner besonderen Einschränkung. Als Trägerfolie werden Folien aus PE/PA/PE oder für günstige Anwendungen PE Folien verwendet.

Die in Schritt A) verwendeten Harze sind dem Fachmann auf dem Gebiet der SMC Prozesse bekannt und unterliegen keiner besonderen Einschränkung. Bevorzugt werden die nachfolgend beschriebenen Reaktionsharze eingesetzt.

Bevorzugte Vorrichtungen und Parameter für Air-Laid-Verfahren werden in WO 99/36622, WO 99/36623 und WO2005/044529 beschreiben. Die in den vorstehend genannten Anmeldungsschriften genannten Parameter sind auch Teil dieser Beschreibung.

Die Einstellung der einzelnen Verfahrensparameter, beispielsweise der Luftdruck bzw. die Luftgeschwindigkeit bei den Air-Laid -Verfahren können leicht eingestellt werden, da diese Verfahren seit langem bekannt sind.

Die in Schritt B) erzeugten Glasfaservliese können insbesondere zur Herstellung von Harzmatten eingesetzt werden. Harzmatten umfassen neben dem Glasfaservlies mindestens eine härtbare Verbindung.

Zur Herstellung der erfindungsgemäßen Harzmatten kann jedes Reaktionsharz verwendet werden, welches üblicherweise auf dem Gebiet der SMC oder Prepreg Technologie eingesetzt wird. Derartige Reaktionsharze sind unter anderem ausführlich in Ullmann's Encyclopaedia of Industrial Chemistry, 5. Auflage auf CD-Rom dargelegt.

Hierzu gehören insbesondere Epoxidharze, ungesättigte Polyesterharze, Vinylesterharze, Polyimidharze, Cyanatesterharze, Phenolharze, Melaminharze und Bismaleinimidharze.

Des Weiteren können die zuvor genannten Harze auch als Mischungen eingesetzt werden, die zwei oder mehr dieser Harzsysteme umfassen.

Vorzugsweise können erfindungsgemäß Reaktionsharze auf Basis von ungesättigten Polyestern eingesetzt werden, die unter Anwendung von Polymerisation und Vernetzung zu duroplastischen Massen aushärten. Ungesättigte Polyesterharze enthalten als zusätzliche Komponenten vielfach copolymerisierbare Monomere, wie beispielsweise Styrol, alpha-Methylstyrol, Vinyltoluol, Methylmethacrylat als Lösungs- oder Verdünnungsmittel sowie bi-funktionelle Monomere, u. a. Divinylbenzol, Diallylphthalat als Vernetzer.

Zur Härtung der zuvor dargelegten Reaktionsharzsysteme werden üblicherweise Katalysatoren eingesetzt. Hierbei werden die Katalysatoren entsprechend dem eingesetzten Reaktionsharz ausgewählt.

Ungesättigte Polyesterharze oder Vinylesterharze können im Allgemeinen durch Polymerisationsinitiatoren, wie beispielsweise Peroxide gehärtet werden. Beispielhaft genannt seien t-Butyl-per-2-ethylhexanoat, Bis-(4-t-butylcyclohexyl)-peroxydicarbonat, Benzylperoxid und Methylisobutylketonperoxid. Des Weiteren können diese Härter als Mischungen eingesetzt werden.

Für Systeme, die Acrylatfunktionen enthalten, können UV-Photoinitiatoren eingesetzt werden, wie jene, die insbesondere eine Lewis- oder Brøstedtsäure durch Bestrahlung freisetzen. Beispiele umfassen Triarylsulfoniumsalze, welche Anionen, wie beispielsweise Tetrafluorborat oder Hexafluorborat, besitzen.

Des Weiteren können die Reaktionsharze Additive umfassen, wie beispielsweise Pigmente, UV-Stabilisatoren, Entformungsmittel, Flammschutzmittel und schwindungskompensierende Additive.

Zu den schwindungskompensierenden Additiven gehören u. a. gesättigte Polyester, Polyurethane, Polyvinylacetat, Polymethylmethacrylat, Polystyrol oder Styrol-Butadien-Copolymere oder Mischungen dieser Additive.

Zu den erfindungsgemäßen Harzmatten gehören u. a. Sheet-Moulding-Compounds (SMC), die einen relativ hohen Anteil an Füllstoffen, Verdickungsmitteln und Pigmenten aufweisen, sowie Prepregs, die einen geringeren Anteil an Füllstoffen, Verdickungsmitteln und Pigmenten aufweisen.

SMC ist die englische Bezeichnung für eine Harzmatte nach DIN 16913. Eine typische SMC Rezeptur umfasst ca. 15 bis 45 Gew.-% Reaktionsharz, 15 bis 45 Gew.-% Füllstoffe und 15 bis 45 Gew.-% Glasfaservlies. Darüber hinaus kann die SMC Rezeptur weitere Zusatzstoffe umfassen, wie beispielsweise Farbpigmente, Härter, Dispergierhilfsmittel, Tixotropiermittel, Eindickhilfsmittel, Haftmittel und/oder Trennmittel.

Als Eindickmittel können Alkali- und/oder Erdalkalioxide bzw. Hydroxide und/oder Isocyanate verwendet werden.

Im Rahmen des erfindungsgemäßen Verfahrens wird zunächst auf eine Trägerfolie eine Reaktionsharzmischung aufgetragen werden, die neben dem Reaktionsharz weitere Additive und Füllstoffe umfassen kann. Der Auftrag ist abhängig vom gewünschten Flächengewicht. Anschließend wird die beschichtete Trägerfolie inline, d.h. unmittelbar, als Ablage für das Mittels AirLaid Technologie erzeugte Glasvlies verwendet. Hierzu wird die beschichtete Trägerfolie inline als Ablageband einer AirLaid-Glasvliesherstellung eingesetzt. Durch das erfindungsgemäße Verfahren müssen die gebildeten Glasfaservliese nicht selbsttragend sein bzw. müssen nicht aufrollbar sein. An die Glasvliese werden keine Mindestfestigkeit-Anforderungen gestellt, dies hat zur Folge, dass die inline gebildeten Glasvliese auch keiner mechanischen Verfestigung, z.B. Vernadelung, unterworfen oder mittels zusätzlicher Binder stabilisiert werden, bevor diese auf der beschichteten Trägerfolie abgelegt werden.

In einer nächsten Stufe wird zunächst auf eine zweite Trägerfolie eine Schicht Reaktionsharz aufgetragen, die ebenfalls Additive, beispielsweise Füllstoffe umfassen kann. Diese zweite Trägerfolie wird von oben auf das inline erzeugte Glasfaservlies aufgebracht, wobei die mit Reaktionsharz versehene Oberfläche der Trägerfolie in Richtung des Glasfaservlieses zeigt. Anschließend wird dieses Gebilde durch eine Imprägnierstrecke transportiert, die durch Druck- und Walkbewegungen eine Benetzung der Fasern mit der Harzmatrix bewirkt. Am Ende der Maschine wird das Gebilde auf Rollen gewickelt oder in geeigneten Containern abgelegt.

Üblich wird ein Reifeprozess durchgeführt, der auf chemische und/oder physikalische Weise eingeleitet werden kann. Vorzugsweise dauert der Reifeprozess 0,5 bis 14 Tage, besonders bevorzugt 1 bis 7 Tage. Nach diesem Reifeprozess kann das SMC weiterverarbeitet werden. Nach Abziehen der Trägerfolien wird das SMC üblicherweise in beheizten Stahlwerkzeugen zu Formteilen verarbeitet bzw. verpresst.

Eine erfindungsgemäße Harzmatte weist vorzugsweise eine Dicke im Bereich von 1 bis 20mm, besonders bevorzugt im Bereich von 2 bis 10mm auf.
Das Flächengewicht bevorzugter Harzmatten liegt vorzugsweise im Bereich von 1000 bis 8000 g/m², besonders bevorzugt im Bereich von 2000 bis 4000 g/m².

Die Harzmatten der vorliegenden Erfindung weisen vorzugsweise eine hohe Fließfähigkeit auf. Hierdurch entfällt die Notwendigkeit die Harzmatte genau in die Form einzulegen. Vorzugsweise ist die Fließfähigkeit der Harzmatte so hoch, dass die Pressform vorzugsweise nur zu 25% bis 80%, besonders bevorzugt nur zu 30 bis 49 % abgedeckt werden muss.

Die erfindungsgemäßen Harzmatten sind vielfältig einsetzbar. Sie können insbesondere zur Herstellung von faserverstärkten Bauteilen dienen, die gute Temperatur- und Lösungsmittelbeständigkeit sowie hohe Steifigkeit, Festigkeit und Schlagzähigkeit auch bei niederen Temperaturen bieten sollen.

Die aus den Harzmatten erhältlichen Bauteile können vorzugsweise eine Class-A Oberflächengüte aufweisen.

Die erfindungsgemäßen Harzmatten sind daher besonders geeignet für Automobilteile. Auch sind die Harzmatten aufgrund ihrer guten mechanischen Eigenschaften ein ideales Material für die Elektro-, Möbel- und Sanitärindustrie.

Die Oberfläche der aus den Harzmatten hergestellten Teile können durch bekannte Mittel bearbeitet und veredelt werden.

Beispielsweise können Folien oder Feinschichtharze vor oder nach der Härtung der Harzmatten aufgebracht werden.

Beispielsweise kann die Harzmatte mit einer Schicht aus thermoplastischem Polymer versehen werden, um nach der Formgebung eine hervorragende Oberflächenqualität zu erhalten. Derartige Composite-Materialien sind beispielsweise in EP 0 361 823 sowie EP 1 322 460 beschrieben.

## Patentansprüche

1. Verfahren zur Herstellung von Sheet Moulding Compounds (SMC) umfassend die Schritte:
A) Aufbringen einer Harzschicht auf eine Trägerfolie,
B) Inline Erzeugen eines Glasfaservlieses aus Glass-Stapelfasern und Ablage auf der gemäß Schritt A) erhaltenen beschichteten Trägerfolie,
C) Aufbringen einer weiteren Harzschicht und einer weiteren Trägerfolie auf das gemäß Schritt B) erhaltene flächige Gebilde,
**dadurch gekennzeichnet, dass** das in Schritt B) gebildete Glasfaservlies eine Inhomogenität von höchstens 10% und ein Flächengewicht von mindestens 400g/m² aufweist und dem Glasfaservlies kein Binder zugesetzt wird.

2. Verfahren gemäß Anspruch 1, **dadurch gekennzeichnet, dass** das Glasvlies eine Festigkeit von weniger als 10N aufweist.

3. Verfahren gemäß Anspruch 1 oder 2, **dadurch gekennzeichnet, dass** das Glasvlies eine Inhomogenität von 2,5% oder weniger aufweist.

4. Verfahren gemäß Anspruch 1 bis 3, **dadurch gekennzeichnet, dass** das Glasvlies ein Flächengewicht von 400g/m² bis 2500 g/m² aufweist.

5. Verfahren gemäß Anspruch 1 bis 4, **dadurch gekennzeichnet, dass** das Glasvlies noch weitere Fasern enthält, die keine Bindefasern sind.

6. Verfahren gemäß Anspruch 5, **dadurch gekennzeichnet, dass** es sich bei den weiteren Fasern um Kohlefasern, mineralische Fasern und Aramidfasern handelt

7. Verfahren gemäß Anspruch 1 bis 6, **dadurch gekennzeichnet, dass** das Glasvlies gebildet und direkt auf der harzbeschichteten Trägerfolie abgelegt wird und nicht in Form eines bereits vorher gefertigten und verfestigten Glasvlieses zugeführt wird.

8. Verfahren gemäß Anspruch 1 bis 7, **dadurch gekennzeichnet, dass** das Glasvlies keiner zusätzlichen mechanischen Verfestigung unterworfen wird bevor es weiterverarbeitet wird.

9. Verfahren gemäß Anspruch 1 bis 8, **dadurch gekennzeichnet, dass** das Glasvlies mittels eines AirLaid-Verfahrens hergestellt wird.

10. Glasfaservlies umfassend geschnittene Glasfasern, **dadurch gekennzeichnet, dass** das Glasfaservlies eine Inhomogenität von höchstens 10% ein Flächengewicht von 400g/m² bis 2500 g/m² und eine Festigkeit von weniger als 10 N aufweist.

11. Glasfaservlies gemäß Anspruch 10, **dadurch gekennzeichnet, dass** die Glasfasern eine Länge im Bereich von 6 mm bis 100 mm aufweisen.

12. Glasfaservlies gemäß Anspruch 10 oder 11, **dadurch gekennzeichnet, dass** die Glasfasern einen Durchmesser von 5 bis 20µm aufweisen.

13. Glasfaservlies gemäß Anspruch 10 bis 12, **dadurch gekennzeichnet, dass** das Glasfaservlies zumindest einseitig mit einer harzbeschichteten Trägerfolie bedeckt ist.

14. Glasfaservlies gemäß Anspruch 10 bis 13, **dadurch gekennzeichnet, dass** das Glasvlies keiner zusätzlichen mechanischen Verfestigung unterworfen wurde.

15. Glasfaservlies gemäß Anspruch 10, **dadurch gekennzeichnet, dass** das Glasvlies mittels eines AirLaid-Verfahrens hergestellt wird.

16. Glasfaservlies gemäß Anspruch 10 bis 15, **dadurch gekennzeichnet, dass** das Glasvlies noch weitere Fasern enthält, die keine Bindefasern sind.

17. Glasfaservlies gemäß Anspruch 16, **dadurch gekennzeichnet, dass** es sich bei den weiteren Fasern um Kohlefasern, mineralische Fasern und Aramidfasern handelt.

18. Harzmatte umfassend mindestens ein Glasfaservlies gemäß mindestens einem der Ansprüche 10 bis 17.

19. Harzmatte gemäß Anspruch 18, **dadurch gekennzeichnet, dass** die Harzmatte mindestens ein Reaktionsharz umfasst.

20. Harzmatte gemäß Anspruch 19, **dadurch gekennzeichnet, dass** die härtbare Verbindung ein ungesättigtes Polyesterharz darstellt.

21. Harzmatte gemäß mindestens einem der Ansprüche 18 bis 20, **dadurch gekennzeichnet, dass** die Harzmatte ein Flächengewicht im Bereich von 1000 bis 8000 g/m2 aufweist.

22. Harzmatte gemäß mindestens einem der Ansprüche 18 bis 21, **dadurch gekennzeichnet, dass** die Fließfähigkeit der Harzmatte so hoch ist, dass eine Pressform nur zu 30 bis 49 % abgedeckt werden muss.

23. Verwendung von Glasfaservliesen gemäß mindestens einem der Ansprüche 10 bis 17 zur Herstellung von Harzmatten.

24. Verwendung gemäß Anspruch 23, **dadurch gekennzeichnet, dass** die Harzmatte ein Sheet Mouldung Compound (SMC) ist.

25. Verwendung von AirLaid Vorrichtungen zur inline Herstellung von Glasfaservliesen für Harzmatten (Sheet Moulding Compounds), insbesondere gemäß einem Verfahren definiert in mindestens einem der Ansprüche 1 bis 9.
